# EUROPÄISCHE PATENTSCHRIFT

(11) **EP 2 658 790 B1**
(45) Veröffentlichungstag und Bekanntmachung des Hinweises auf die Patenterteilung: **14.05.2014**
(21) Anmeldenummer: 12772266.8
(22) Anmeldetag: 28.09.2012
(51) Int. Cl.: B65D 63/10, B29C 55/06, B29K 67/00, B29K 23/00, B29K 105/12

(54) **KUNSTSTOFF-UMREIFUNGSBAND ZUM UMSCHLINGEN VON EINEM ODER MEHREREN GEGENSTÄNDEN UND VERFAHREN ZUR HERSTELLUNG EINES KUNSTSTOFF-UMREIFUNGSBANDES**
PLASTICS-MATERIAL STRAPPING BAND FOR WRAPPING AROUND ONE OR MORE ARTICLES, AND METHOD FOR PRODUCING A PLASTICS-MATERIAL STRAPPING BAND
BANDE DE CERCLAGE EN MATÉRIAU SYNTHÉTIQUE POUR ENTOURER UN OU PLUSIEURS OBJETS ET PROCÉDÉ DE PRODUCTION D'UNE BANDE DE CERCLAGE EN MATÉRIAU SYNTHÉTIQUE

(30) Priorität: 14.03.2012 DE 102012102155
(43) Veröffentlichungstag der Anmeldung: 06.11.2013
(73) Patentinhaber: TITAN Umreifungstechnik GmbH & Co.KG, 58332 Schwelm (DE)
(72) Erfinder: LENZEN, Peter Wilhelm, 45549 Sprockhövel (DE); POLLEHN Harald, 47624 Kevelar (DE)
(74) Vertreter: Nunnenkamp, Jörg
(86) Internationale Anmeldenummer: PCT/EP2012/069237
(87) Internationale Veröffentlichungsnummer: WO 2013/135315

(56) Entgegenhaltungen:
- EP-A1- 0 030 648
- EP-A1- 0 481 471
- WO-A1-03/087200
- GB-A- 1 132 060
- JP-A- 2008 254 557

## Beschreibung

Die Erfindung betrifft ein Kunststoff-Umreifungsband zum Umschlingen von einem oder mehreren Gegenständen. Außerdem betrifft die Erfindung ein Verfahren zur Herstellung eines derartigen Kunststoff-Umreifungsbandes.

Umreifungsbänder sind bisher überwiegend aus Stahl gefertigt und dienen beispielsweise dazu, Metallcoils zusammenzufassen, Verpackungsgegenstände auf einer Palette zu fixieren etc.. Neben solchen Stahl-Umreifungsbändern werden in der Praxis zunehmend Kunststoff-Umreifungsbänder eingesetzt.

So beschreibt die DE 1 529 995 ein Spannband hoher Zugfestigkeit, welches aus einem homogenen, extrudierten, axial orientierten polymeren Material besteht. Solche Kunststoff-Umreifungsbänder sind im Vergleich zu Stahl-Umreifungsbändern von Vorteil, weil die zugehörige Verpackung nicht eingeschnitten wird und die Verbindung der Enden auf einfache Art und Weise durch beispielsweise Reibschweißen erfolgen kann. Allerdings sind Kunststoff-Umreifungsbänder nicht für hohe Temperaturen geeignet.

Eine thermische Schweißverbindung wird unter anderem in der DE 40 07 560 A1 beschrieben. Außerdem befasst sich dieses Dokument mit der prinzipiellen Möglichkeit, einzelne Kunststoff-Umreifungsbänder aus einem Kunststoff-Umreifungsbandmaterial herauszuschneiden. Zu diesem Zweck wird das Kunststoff-Umreifungsbandmaterial als Folienmaterial hergestellt, in Bänder geschnitten und anschließend einer Verstreckung unterzogen, um eine planare Orientierung der mikromolekularen Ketten zu erreichen.

Daneben ist es selbstverständlich auch möglich, das Kunststoff-Umreifungsband direkt durch Extrusion herzustellen, wie dies beispielsweise in der WO 03/087200 A1 beschrieben wird. An dieser Stelle wird darüber hinaus ein Kunststoff-Umreifungsband vorgestellt, welches sich im Wesentlichen aus Polyester und einem chemisch nicht modifizierten Polyolefin zusammensetzt. Dadurch soll die auf diese Weise hergestellte Umreifung eine erhöhte Festigkeit gegen ein Aufspalten in der Längsrichtung aufweisen.

Der zuvor beschriebene Effekt wird allerdings mit dem Nachteil erkauft, dass die Temperaturstabilität des bekannten Kunststoff-Umreifungsbandes in gewisser Weise gelitten hat. Das lässt sich auf die Beimischung Von Polyolefin und beispielsweise Polypropylen zu dem Hauptbestandteil Polyester zurückführen. Denn der Schmelzpunkt von Polyester ist im Bereich von ca. 270 °C angesiedelt, wohingegen für Polypropylen Schmelztemperaturen von 130 °C beobachtet werden. Dadurch lässt sich das bekannte Kunststoff-Umreifungsband nicht zum Umschlingen von Gegenständen einsetzen, die beim Umschlingungsvorgang eine Temperatur im zuvor angegebenen Bereich aufweisen. Außerdem ergibt sich bei dem bekannten Kunststoff-Umreifungsband der weitere Nachteil, dass bisher eingesetzte Schweißzangen zur Verbindung der Enden unter Umständen temperaturmäßig angepasst werden müssen, was die Akzeptanz des fraglichen Bandes bei Kunden oder Anwendern herabsetzt.

Vor diesem grundsätzlichen Problem steht auch das Umreifungsband, welches durch die JP 11-245290 A bekannt geworden ist. Tatsächlich wird das fragliche Umreifungsband aus Rohmaterial hergestellt, welches Polyester zu 60 Gew.- % oder mehr enthält. Zusätzlich können Elastomere, wie beispielsweise Polyolefine zugegeben werden, und zwar in einem Gewichtsanteil von einem bis zwanzig Teilen. Darüber hinaus wird der weitere Zusatz von beispielsweise Flammschutzmitteln, Stabilisierungsmitteln, Färbemitteln etc. erwähnt. An der mangelnden Temperaturstabilität und der nach wie vor für bestimmte Anwendungen nicht ausreichenden Festigkeit hat sich durch diese Maßnahmen jedoch nichts geändert.

Im Rahmen der GB 1,132,060 wird ein Kunststoff-Umreifungsband beschrieben, welches sich unter anderem damit beschäftigt, die Reißfestigkeit zu erhöhen. Dies gilt allerdings für extrudierte Folienbänder, aus welchen dann einzelne Umreifungsstreifen herausgeschnitten werden. Zu diesem Zweck lehrt die GB 1,132,060 bei einem Kunststoffband auf Basis von Polyolefin den Einsatz von 1 bis 30 Gew.-% Fasermaterial bezogen auf die Gesamtmasse. Dabei wird das Fasermaterial in Längsrichtung orientiert. - Eine solche Vorgehensweise lässt sich bei der Produktion von Einzelstreifenmaterial schon deshalb nicht umsetzen, weil die Breite solcher Einzelstreifen typischerweise 20 bis 30 mm bei einer Dicke bis zu 1 mm bzw. bis zu 1,5 mm beträgt.

Ganz abgesehen davon ist die Herstellung von Einzelstreifen aus Folie bzw. Folienband entsprechend der GB 1,132,060 schon insofern nachteilig, als das Folienband kaum mit einer durchgängig gleichen Materialdicke produziert werden kann. Außerdem sind Inhomogenitäten bei der Einbringung der Fasern zu befürchten. Eine möglichst gleichbleibende Materialstärke ist jedoch von besonderer Bedeutung, damit die Enden des Kunststoffbandes sicher miteinander verschlossen werden können. Hierzu wird üblicherweise auf die bereits angesprochenen Schweißzungen bzw. Schweißzangen und damit einen Kunststoffschweißprozess zurückgegriffen oder mit einer Reibschweißverbindung gearbeitet. In beiden Fällen führen Schwankungen der Materialstärke der hergestellten Einzelstreifen dazu, dass diese im Verschlussbereich nicht vollflächig miteinander gekoppelt sind, so dass der Verschluss reißen kann.

Der Erfindung liegt das technische Problem zugrunde, ein derartiges Kunststoff-Umreifungsband zur Verfügung zu stellen, welches sich über eine im Vergleich zum Stand der Technik gesteigerte Temperaturstabilität und zugleich möglichst hohe Festigkeit auszeichnet. Außerdem soll das Umreifungsband möglichst dimensionsstabil hergestellt werden können, so dass auch der Verschluss mit einer im Vergleich zur bisherigen Vorgehensweise gesteigerten Festigkeit ausgerüstet ist.

Zur Lösung dieser technischen Problemstellung ist Gegenstand der Erfindung ein Kunststoff-Umreifungsband zum Umschlingen von einem oder mehreren Gegenständen mit folgenden Bestandteilen:
a) bis zu ca. 90 Gew.-% Polyester;
b) ca. 1 Gew.-% bis 5 Gew.-% Polyolefin und
c) ca. 5 Gew.-% bis 10 Gew.-% Fasermaterial.

Bei den vorerwähnten Bestandteilen a) bis c) des Kunststoff-Umreifungsbandes handelt es sich um die Hauptbestandteile, zu denen unter Umständen noch nicht vermeidbare Verschmutzungen oder andere Bestandteile hinzutreten mögen, die in der Summe jedoch nicht mehr als 1 Gew.-% des fraglichen Kunststoff-Umreifungsbandes (im trockenen Zustand) ausmachen.

Außerdem drückt die Angabe "ca." bei den Gewichtsangaben aus, dass die Bestimmung der einzelnen Bestandteile typischerweise mit Hilfe der dynamischen Differential-Kalorimetrie (englisch: Differential Scanning Calorimetry- DSC) erfolgt. Zum vorgenannten Verfahren, dessen Anwendung und Ausprägung wird auf das Lehrbuch "Differential Scanning Calorimetry - An Introduction for Practitioners" der Autoren Höhne, Hemminger und Flammersheim (Springer-Verlag Berlin, 1996) ausdrücklich Bezug genommen. Jedenfalls ist die dynamische Differenz-Kalorimetriemessung mit systembedingten Unsicherheiten bei der Bestimmung des jeweiligen Gewichtsanteiles verbunden, die durch das "ca." zum Ausdruck kommen.

Bei dem erfindungsgemäßen Kunststoff-Umreifungsband handelt es sich regelmäßig um einen sogenannten Einzelstreifen, das heißt das fragliche Kunststoff-Umreifungsband wird unmittelbar in der benötigten Breite und Materialstärke extrudiert und nicht beispielsweise durch Längsschneiden einer Folie hergestellt. Das erfindungsgemäße Kunststoff-Umreifungsband ist also als Einzelstreifenband ausgelegt. Das Kunststoff-Umreifungsband bzw. Einzelstreifenband verfügt in diesem Zusammenhang typischerweise über eine Breite bzw. Materialbreite von 2 mm bis 40 mm und vorzugsweise eine Materialbreite von 5 mm bis 40 mm. Außerdem wird eine Materialstärke bzw. Materialdicke im Bereich von 0,1 mm bis 3 mm und vorzugsweise eine Materialstärke von 0,3 mm bis 2 mm beobachtet. Meistens reichen an dieser Stelle Materialstärken von bis zu 1,2 mm aus.

Für das Fasermaterial gilt regelmäßig, dass die an dieser Stelle eingesetzten Fasern eine höhere Schmelztemperatur als die Komponenten a) und b) aufweisen. Das heißt, die Schmelztemperatur der Fasern des Fasermaterials liegt im allgemeinen deutlich oberhalb von 300 °C. Auf diese Weise ist sichergestellt, dass selbst bei erhöhter Anwendungstemperatur beim Einsatz des erfindungsgemäßen Kunststoff-Umreifungsbandes die Fasern ihre Struktur behalten und insbesondere in der Lage sind, Zugkräfte in Längsrichtung des Kunststoff-Umreifungsbandes aufnehmen zu können.

Wie üblich handelt es sich bei den Fasern um im Verhältnis zur Länge dünne und flexible Gebilde. Die erfindungsgemäß eingesetzten Fasern im Kunststoff-Umreifungsband nehmen primär (Längs-)Zugkräfte auf und dienen folglich dazu, die Festigkeit des solchermaßen hergestellten Kunststoff-Umreifungsbandes in seiner Längsrichtung zu erhöhen. Dabei mögen Zugfestigkeiten von wenigstens etwa 30 kN/cm², insbesondere sogar von 40 kN/cm² und mehr erreicht werden. Die Fasern des Fasermaterials verfügen typischerweise über eine Länge bis maximal 20 mm und insbesondere 10 mm. Ihr Durchmesser mag im Bereich bis maximal 1 mm und vorzugsweise bei 0,5 mm und weniger angesiedelt sein. Meistens beträgt der Durchmesser im Maximum 0,1 mm bis unter Umständen maximal 0,2 mm.

Dadurch lassen sich die Fasern problemlos in das Kunststoffmaterial einbetten und sind hierin auch zumindest während des Herstellungsvorganges beweglich. Das gilt selbst für die Fälle, in denen das Kunststoffmaterial bzw. der erfindungsgemäße Einzelstreifen respektive Einzelbandstreifen eine Materialdicke von lediglich ca. 1 bis 2 mm aufweist. Die bereits angesprochene Beweglichkeit der Fasern ist erforderlich, weil das extrudierte Kunststoff-Umreifungsband oder Kunststoff-Umreifungsbandmaterial erfindungsgemäß gestreckt wird, wodurch nicht nur eine molekulare Orientierung im Kunststoff bzw. der Kunststoffmatrix stattfindet, sondern auch die Fasern des Fasermaterials orientiert werden. Sowohl die molekulare Orientierung als auch diejenige der Fasern erfolgt dabei jeweils in Längsrichtung des erfindungsgemäßen Kunststoff-Umreifungsbandes, um die geschilderten und angegebenen Festigkeiten zu erreichen.

In Verbindung mit der Tatsache, dass sich die Kunststoffmatrix zur Aufnahme des Fasermaterials aus überwiegend Polyester und zusätzlich Polyolefin zusammensetzt, wird ein Kunststoff-Umreifungsband zur Verfügung gestellt, welches nicht nur über signifikante Festigkeitswerte in Längsrichtung verfügt, sondern auch nicht zum Aufspleißen bzw. Aufspalten in Längsrichtung unter Spannung neigt. Das lässt sich im Wesentlichen darauf zurückführen, dass durch den zusätzlichen Einsatz von Polyolefin mit dem angegebenen Gewichtsanteil von ca. 1 Gew.-% bis 5 Gew.-% die Polymerketten des hauptsächlich (bis zu 90 Gew.-%) eingesetzten Polyesters miteinander (quer) verbunden werden.

Für eine solche Verbindung der einzelnen Polyesterketten sorgt schon ein geringer Gewichtsanteil des eingesetzten Polyolefins von ca. 1 Gew.-%. Je mehr Polyolefin Verwendung findet, desto ausgeprägter ist dieser Effekt, wobei allerdings ca. 5 Gew.-% an Polyolefin eine Obergrenze darstellen. Das heißt, ein größerer Gewichtsanteil an Polyolefin führt hier dazu, dass die insgesamt mit dem hohen Polyesteranteil erreichte Festigkeit deutlich sinkt.

Aus diesem Grund kann der Anteil an Polyolefinen regelmäßig nicht gesteigert werden bzw. lassen sich hohe Gewichtsanteile an Polyolefin im Rahmen der Erfindung nur dadurch kompensieren, dass das zusätzlich eingebrachte Fasermaterial die an sich durch das Polyolefin herabgesetzte Festigkeit nicht nur ausgleicht, sondern sogar überkompensiert. Folgerichtig kombiniert das erfindungsgemäße Kunststoff-Umreifungsband die Vorteile eines bekannten Kunststoffbandes aus Polyester/Folyolefin dahingehend, dass ein Aufspleißen verhindert wird zugleich damit, dass die Festigkeit gegenüber dem bekannten Band sogar noch eine Steigerung erfahren hat.

Dadurch ist das erfindungsgemäße Kunststoff-Umreifungsband für den Einsatz von Recyclingmaterial prädestiniert. Tatsächlich stammt Recyclingmaterial zum Teil von PET-Flaschen, die zu sogenannten PET-Flakes verarbeitet werden können, wie dies prinzipiell in der US 4 830 188 beschrieben wird. Solche PET-Flakes setzen sich typischerweise aus überwiegend Polyester und teilweise einem oder mehreren Polyolefinen zusammen. Im Rahmen der Erfindung können nun solche PET-Flakes vorteilhaft zur Herstellung von Kunststoff-Umreifungsband eingesetzt werden, wobei je nach Ausgangszusammensetzung der PET-Flakes dann noch Zusätze zu berücksichtigen sind und insbesondere im Rahmen der Erfindung das Fasermaterial entsprechend c) in der dort angegebenen Konzentration dem Extrudat, also den zu extrudierenden Materialien vor der Extrusion beigemischt wird. Die im Rahmen des Merkmales c) angesprochenen Gewichtsbereiche von ca. 5 bis 10 Gew.-% an Fasermaterial stellen sich dadurch ein, dass ein gewisser Anteil an Fasern grundsätzlich erforderlich ist, um überhaupt die Festigkeit wie beschrieben in Längsrichtung spürbar verbessern zu können. Hier hat sich herausgestellt, dass typischerweise bereits 5 Gew.-% an Fasermaterial eine Verbesserung bringt.

Die Festigkeit lässt sich natürlich nicht unbegrenzt steigern, weil ansonsten die in die Kunststoffmatrix eingebrachten Fasern beim zwangsläufigen Streckvorgang nicht mehr problemlos in Längsrichtung des Kunststoff-Umreifungsbandes ausgerichtet werden können. Hier hat sich eine Obergrenze von ca. 10 Gew.-% an Fasermaterial als noch praktikabel herausgestellt, weil ein solcher Gewichtsanteil nach wie vor die nötige Beweglichkeit der einzelnen Fasern bei dem beschriebenen Streckvorgang zur Verfügung stellt.

Im Rahmen einer vorteilhaften Ausgestaltung der Erfindung beträgt der Anteil des Polyesters ca. 85 Gew.-% bis 90 Gew.-% und ist insbesondere bei ca. 90 Gew.-% angesiedelt. Höhere Polyesteranteile sind aufgrund des Zusatzes an Fasermaterial nicht erforderlich, vielmehr sorgen die zugesetzten Fasern an dieser Stelle für eine signifikante Steigerung der Festigkeit des Polyestergrundmaterials, auch bei Anwesenheit der Polyolefine.

Bei dem eingesetzten Polyolefin kann es sich grundsätzlich um Polyethylen, Polypropylen sowie Kombinationen handeln. Prinzipiell sind vergleichbare Polyolefine denkbar, wie sie im Rahmen der einleitend bereits in Bezug genommenen WO 03/0987200 A1 im Detail beschrieben werden.

Als Fasermaterial können ganz unterschiedliche Werkstoffe zum Einsatz kommen. So ist prinzipiell die Verwendung von Naturfasern möglich. Zu solchen Naturfasern gehören auch Pflanzenfasern, die im Rahmen der Erfindung eingesetzt werden können. Von besonderer Bedeutung sind alternativ oder zusätzlich verwendete Mineralfasern, die beispielsweise in der Bauindustrie bei Fasergips Verwendung finden. Solche Mineralfasern bezeichnen Fasern ohne organisch gebundenen Kohlenstoff.

Alternativ oder zusätzlich zu den Naturfasern als Fasermaterial kann auch auf Chemiefasern, früher als Kunstfasern bezeichnet, zurückgegriffen werden. Hier haben sich besonderes cellulosische Fasern oder Gummifasern aus natürlichen Polymeren als günstig erwiesen. Neben solchen Fasern aus natürlichen Polymeren können auch Fasern aus synthetischen Polymeren eingesetzt werden, beispielsweise Polyamidfasern, Aramidfasern, Polytetrafluorethylenfasern, PVC-Fasern und so weiter. - Voraussetzung für diese Chemiefasern bzw. allgemein die Fasern des Fasermaterial und ihren Einsatz im Rahmen der Erfindung ist regelmäßig, dass sie eine höhere Schmelztemperatur als die Komponenten a) und b) des erfindungsgemäßen Kunststoff-Umreifungsbandes aufweisen und meistens mit einer Schmelztemperatur oberhalb von 300 °C ausgerüstet sind.

Aufgrund dieser Anforderungen kommen ganz besonders bevorzugt industriell erzeugte anorganische Fasern zum Einsatz. Hierbei handelt es sich beispielsweise um Glasfasern, Basaltfasern, Kohlenstofffasern oder dergleichen. Auch Keramikfasern sind denkbar. Dabei versteht es sich in diesen sämtlichen Fällen, dass sich das Fasermaterial grundsätzlich auch kombinatorisch aus den zuvor beschriebenen und einzeln geschilderten Fasern zusammensetzt oder zusammensetzen kann.

Gegenstand der Erfindung ist auch ein Verfahren zur Herstellung eines Kunststoff-Umreifungsbandes, wie es zuvor im Detail beschrieben worden ist. Das Verfahren ist im Patentanspruch 10 definiert.

Das erfindungsgemäße Kunststoff-Umreifungsband zeichnet sich nicht nur durch eine höhere Festigkeit im Vergleich zum Stand der Technik sowie gesteigerte Temperaturstabilität aus. Sondern es wird auch ein verbessertes Relaxationsverhalten beobachtet. Hierunter ist die Eigenschaft von Kunststoff-Umreifungsbändern zu verstehen, einen stationären Zustand mit verringerter Spannung einzunehmen. Tatsächlich beobachtet man beispielsweise bei Kunststoff-Umreifungsbändern aus Polyester, dass diese nach dem Umschlingungsvorgang ca. 30 % ihrer Spannung innerhalb der ersten 5 Tage bei Raumtemperaturen verlieren. Erhöhte Temperaturen führen dazu, dass der beschriebene Spannungsabfall um ca. 30 % sogar noch in weniger als 5 Tagen vollzogen wird.

Das heißt, die mechanische Spannung nimmt bei konstanter Dehnung über die Zeit gesehen ab, und zwar bei einem Kunststoffband aus Polyester um ca. 30 % im beschriebenen Beispielfall. Im Rahmen der Erfindung hat sich nun herausgestellt, dass durch den Zusatz von Polyolefin und insbesondere den Einsatz von ca. 5 Gew.-% bis 10 Gew.-% an Fasermaterial das Relaxationsverhalten positiv beeinflusst wird. Tatsächlich beobachtet man bei dem erfindungsgemäßen Kunststoff-Umreifungsband eine zeitliche Abnahme der mechanischen Spannung bei konstanter Dehnung von deutlich weniger als 30 %, vorzugsweise sogar von lediglich 20 % sowie darunter und insbesondere sogar von nur 10 % und weniger. Das heißt, die Spannung nimmt bei konstanter Dehnung nach besonders bevorzugter Ausführungsform um lediglich maximal 10 % ab. Dadurch müssen zu umschlingende Gegenstände beim Umschlingungsvorgang nicht mit einer so hohen Spannung des Umreifungsbandes umschlungen werden, wie dies bisher der Fall war. Dadurch lassen sich geringer dimensionierte Umreifungsmaschinen einsetzen und wird natürlich auch weniger Energie benötigt.

Bei den zu umreifenden Gegenständen handelt es sich grundsätzlich um beispielsweise Dosen, Steine, Ballen etc., die auf Spannplatten fixiert werden mögen. Selbstverständlich können auch andere Gegenstände mit Hilfe des erfindungsgemäßen Kunststoff-Umreifungsbandes bei Bedarf umschlungen werden.

Schließlich hat es sich bewährt, wenn das erfindungsgemäße Kunststoff-Umreifungsband auf zumindest einer Bandoberfläche mit aufgeprägten Strukturen ausgerüstet ist. Hierbei kann es sich um regelmäßige Strukturen wie beispielsweise Rauten etc. handeln. Auf diese Weise wird die Auflagefläche des Kunststoff-Umreifungsbandes bei seinem Transport in beispielsweise einem Bandführungskanal verringert, so dass es zu einer Reibungsreduzierung kommt. Zugleich beobachtet man die Ausbildung einer Art "Luftkissens", welches den Transport des erfindungsgemäßen Kunststoff-Umreifungsbandes durch den fraglichen Bandführungskanal weiter vereinfacht und verbessert. Außerdem lassen sich durch solche Ein- oder Aufprägungen gezielt besondere Eigenschaften des fraglichen Kunststoff-Umreifungsbandes positiv beeinflussen. Das gilt insbesondere für die Steifigkeit des fraglichen Bandes, so dass bei Realisierung solcher Auf- oder Einprägungen der Bandquerschnitt reduziert werden kann. Das führt zu verringerten Herstellungskosten. Die beschriebenen Auf-oder Einprägungen lassen sich mit einer oder mehreren Prägewalzen einbringen, wie nachfolgend noch näher erläutert wird.

Tatsächlich werden insgesamt synergetische Effekte zwischen den Aufprägungen einerseits und dem Fasermaterial sowie der Kombinatin aus Polyester und Polyolefin im Kunststoff-Umreifungsband andererseits beobachtet. Denn die Kombination Polyester/Polyolefin führt bereits zu einer erhöhten Festigkeit und dazu, dass ein solchermaßen hergestelltes Umreifungsband und insbesondere Einzelstreifenband nicht in Längsrichtung aufspaltet bzw. aufspleißt (vgl. WO 03/087200 A1).

Durch die eingebrachten Fasern bzw. das Fasermaterial in der angegebenen Gewichtszusammensetzung wird nun zusätzlich und einerseits sichergestellt, dass das solchermaßen produzierte Kunststoff-Umreifungsband bei erhöhten Anwendungstemperaturen zum Einsatz kommen kann und andererseits die Fasern ihre Struktur behalten, was erfindungsgemäß auch für das gesamte Kunststoff-Umreifungsband gilt. Das heißt, das erfindungsgemäße Umreifungsband ist durch eine hohe Dimensionsstabilität auch bei erhöhten Temperaturen gekennzeichnet. Dadurch lassen sich die Enden des erfindungsgemäßen Kunststoff-Umreifungsbandes einwandfrei miteinander thermisch verbinden, und zwar vollflächig, so dass erhöhte Festigkeiten im Vergleich zum Stand der Technik an dieser Stelle beobachtet werden. Außerdem trägt die erhöhte Dimensionsstabilität im Vergleich zum genannten Stand der Technik dazu bei, dass Beschädigungen des Kunststoff-Umreifungsbandes im Gebrauch deutlich reduziert sind.

Schließlich begünstigt die Aufprägung den Transport des erfindungsgemäßen Kunststoff-Umreifungsbandes durch einen Umreifungsbandkanal auf der einen Seite und lässt auf der anderen Seite eine weitere Verringerung der Materialdicke im Vergleich zu Umreifungsbändern ohne Aufprägungen zu. Das heißt, sowohl die Aufprägungen als auch das eingebrachte Fasermaterial steigern die Festigkeit des erfindungsgemäßen Kunststoff-Umreifungsbandes mit der dadurch bedingten Möglichkeit, die durchgängige Materialdicke reduzieren zu können. Auf diese Weise lassen sich Einsparungen für das eingesetzte Rohmaterial beobachten, die im zweistelligen Prozentbereich liegen.

Im Übrigen findet der Vorgang der Prägung am Ende der Herstellung des erfindungsgemäßen Kunststoff-Umreifungsbandes statt, wenn die eingelagerten Fasern nicht oder kaum mehr innerhalb des Kunststoffmaterials beweglich sind. Dadurch sorgt der ergänzende Prägeschritt für eine zusätzliche und gewünschte Verdichtung der Fasern im Innern des Kunststoff-Umreifungsbandes. Dadurch wird die Festigkeit nochmals gesteigert.

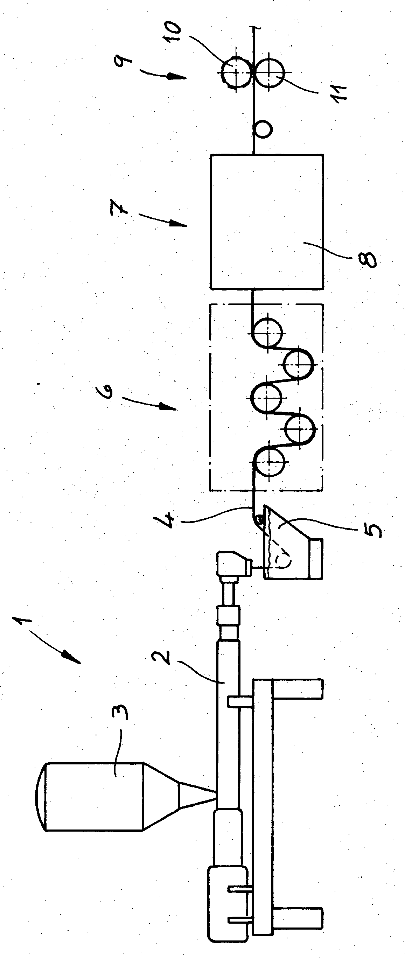

Im Rahmen des nachfolgenden Ausführungsbeispiels wird eine Anlage zur Herstellung des erfindungsgemäßen Kunststoff-Umreifungsbandes näher erläutert. Die einzige Figur zeigt eine Vorrichtung zur Herstellung eines Kunststoff-Umreifungsbandes zum Umschlingen von einem oder mehreren Gegenständen.

Man erkennt in der Figur zunächst einmal eine Extrusionsvorrichtung 1, die mit einer Extruderschnecke 2 und einem Extruderbehälter 3 ausgerüstet ist. In dem Extruderbehälter 3 sind die Rohstoffe zur Herstellung des Kunststoff-Umreifungsbandes 4 ausgangsseitig der Extruderschnecke 2 bevorratet und werden der Extruderschnecke 2 zugeführt. Der Extruderbehälter 3 enthält folglich das Extrudat.

Nach der Extrusion des Kunststoff-Umreifungsbandes 4 ausgangsseitig der Extruderschnecke 2 durchläuft dieses zunächst ein Wasserbad 5. Im Anschluss an das Wasserbad 5 sind eine erste Streckeinrichtung 6 und eine zweite Streckeinrichtung 7 vorgesehen. Die zweite Streckeinrichtung 7 ist darüber hinaus mit einem Ofen 8 ausgerüstet, durch welchen das Kunststoff-Umreifungsband 4 beim zweiten Streckvorgang hindurchgeführt wird. Für die Verstreckung gilt, dass das die Extruderschnecke 2 verlassende Kunststoff-Umreifungsband 4 insgesamt unter Berücksichtigung eines Streckgrades von 1:2 bis 1:5 und insbesondere 1:4 gestreckt wird. Das heißt, das die Extruderschnecke 2 verlassende Kunststoff-Umreifungsband 4 wird auf die doppelte bis zur fünffachen Länge in der ersten bzw. zweiten Streckeinrichtung 6, 7 verstreckt.

Der Ofen 8 bei der zweiten Streckeinrichtung 7 sorgt dafür, dass die beim Strecken erreichte molekulare Orientierung der Polymerketten im Material unverändert bleibt sowie ebenso die Ausrichtung der Fasern und nach Beendigung des Streckvorganges nicht verschwindet bzw. sich auflöst. Im Anschluss an die beiden Streckvorrichtungen 6, 7 wird dann das Kunststoff-Umreifungsband 4 noch geprägt. Hierzu ist eine Prägevorrichtung 9 vorgesehen, die mit einer Prägewalze 10 und einer mit der Prägewalze 10 wechselwirkenden Gegenwalze bzw. Gegendruckwalze 11 ausgerüstet ist.

Mit Hilfe der Prägevorrichtung 9 wird das Kunststoff-Umreifungsband 4 an zumindest einer Bandoberfläche in Längsrichtung mit Ein- und/oder Aufprägungen ausgerüstet. Dazu verfügt die Prägewalze 10 über eine gegenüber der Umgebungstemperatur erhöhte Temperatur von beispielsweise 50 °C bis 60 °C und ist mit einer je nach gewünschter Prägung entsprechenden Oberflächenkontur ausgerüstet. Auf diese Weise kann nicht nur die Kontaktoberfläche des Kunststoff-Umreifungsbandes mit beispielsweise einem Bandführungskanal gegenüber einer vollflächigen Anlage deutlich reduziert werden und folglich auch die Reibung vermindert werden, sondern es lässt sich auch der zuvor bereits angesprochene "Luftkisseneffekt" beim Transport des Kunststoff-Umreifungsbandes nutzen. Hinzu kommt, dass die eingebrachten Einprägungen in Querrichtung des Kunststoff-Umreifungsbandes insgesamt dessen Steifigkeit erhöhen. Dadurch lässt sich bei gleicher Steifigkeit der Bandquerschnitt verringern, was zu einer Materialersparnis korrespondiert.

Mit der geeigneten Vorrichtung wird das Kunststoff-Umreifungsband 4 direkt hergestellt, steht also in einer Breite von ca. 5 mm bis ca. 40 mm zur Verfügung. Die Materialstärke beträgt ca. 0,1 mm bis 3 mm. Alternativ hierzu kann aber auch mit Kunststoff-Umreifungsbandmaterial ausgangsseitig der Extrusionsvorrichtung 1 der beschriebenen Spezifikation gearbeitet werden. Das Kunststoff-Umreifungsbandmaterial mag vor den Streckeinrichtungen 6, 7 in Längsrichtung in die Kunststoff-Umreifungsbänder 4 geschnitten werden, was allerdings nicht dargestellt ist.

## Patentansprüche

1. Kunststoff-Umreifungsband (4) zum Umschlingen von einem oder mehreren Gegenständen mit folgenden Bestandteilen:
a) bis zu ca. 90 Gew.-% Polyester,
b) ca. 1 Gew.-% bis 5 Gew.-% Polyolefin und
c) ca. 5 Gew.-% bis 10 Gew.-% Fasermaterial.

2. Kunststoff-Umreifungsband (4) nach Anspruch 1, **dadurch gekennzeichnet, dass** das Fasermaterial nach c) eine höhere Schmelztemperatur als die Komponenten a) und b) aufweist.

3. Kunststoff-Umreifungsband (4) nach Anspruch 1 oder 2, **dadurch gekennzeichnet, dass** der Anteil des Polyesters nach a) ca. 85 Gew.-% bis 90 Gew.-% und insbesondere ca. 90 Gew.-% beträgt.

4. Kunststoff-Umreifungsband (4) nach einem der Ansprüche 1 bis 3, **dadurch gekennzeichnet, dass** es sich bei dem Polyolefin um Polyethylen, Polypropylen sowie Kombinationen handelt.

5. Kunststoff-Umreifungsband (4) nach einem der Ansprüche 1 bis 4, **dadurch gekennzeichnet, dass** sich das Fasermaterial nach c) aus Fasern einer Länge bis maximal 20 mm und insbesondere 10 mm zusammensetzt.

6. Kunststoff-Umreifungsband (4) nach einem der Ansprüche 1 bis 5, **dadurch gekennzeichnet, dass** als Fasermaterial nach c) Naturfasern, insbesondere Pflanzen-und/oder Mineralfasern, eingesetzt werden.

7. Kunststoff-Umreifungsband (4) nach einem der Ansprüche 1 bis 6, **dadurch gekennzeichnet, dass** als Fasermaterial nach c) Chemiefasern, insbesondere cellulosische Fasern oder Gummifasern aus natürlichen Polymeren, eingesetzt werden.

8. Kunststoff-Umreifungsband (4) nach einem der Ansprüche 1 bis 7, **dadurch gekennzeichnet, dass** sich das Fasermaterial nach c) aus anorganischen Fasern, wie beispielsweise Glasfasern, Basaltfasern, Kohlenstofffasern, Keramikfasern oder dergleichen zusammensetzt.

9. Kunststoff-Umreifungsband (4) nach einem der Ansprüche 1 bis 8, **dadurch gekennzeichnet, dass** sich das Fasermaterial nach c) kombinatorisch aus Fasern gemäß den Ansprüchen 6 bis 8 zusammensetzt.

10. Verfahren zur Herstellung eines Kunststoff-Umreifungsbandes (4), nach einem der Ansprüche 1 bis 9, wonach die Bestandteile a) bis c) miteinander gemischt und gemeinsam extrudiert sowie anschließend das entstehende Kunststoff-Umreifungsband (4) oder Kunststoff-Umreifungsbandmaterial gestreckt wird, und wonach zum Abschluss das Kunststoff-Umreifungsband (4) oder das Kunststoff-Umreifungsbandmaterial unter Berücksichtigung eines Streckgrades von 1:2 bis 1:5 und insbesondere 1:4 gestreckt sowie anschließend gegebenenfalls an einer Bandoberfläche geprägt wird.

## Claims

1. A plastics strapping band (4) for wrapping around one or more articles, comprising the following constituents:
a) up to approximately 90 % by weight of polyester,
b) approximately 1 % by weight to 5 % by weight of polyolefin, and
c) approximately 5 % by weight to 10 % by weight of fibre material.

2. The plastics strapping band (4) according to claim 1, **characterised in that** the fibre material according to c) has a higher melting point than the components a) and b).

3. The plastics strapping band (4) according to claim 1 or 2, **characterised in that** the proportion of polyester according to a) is approximately 85 % by weight to 90 % by weight and in particular is approximately 90 % by weight.

4. The plastics strapping band (4) according to one of claims 1 to 3, **characterised in that** the polyolefin is polyethylene, polypropylene and combinations.

5. The plastics strapping band (4) according to one of claims 1 to 4, **characterised in that** the fibre material according to c) is composed of fibres having a length up to at most 20 mm and in particular 10 mm.

6. The plastics strapping band (4) according to one of claims 1 to 5, **characterised in that** natural fibres, in particular plant and/or mineral fibres, are used as fibre material according to c).

7. The plastics strapping band (4) according to one of claims 1 to 6, **characterised in that** chemical fibres, in particular cellulosic fibres or rubber fibres made of natural polymers, are used as fibre materials according to c).

8. The plastics strapping band (4) according to one of claims 1 to 7, **characterised in that** the fibre material according to c) is composed of inorganic fibres, such as glass fibres, basalt fibres, carbon fibres, ceramic fibres or the like.

9. The plastics strapping band (4) according to one of claims 1 to 8, **characterised in that** the fibre material according to c) is composed of a combination of fibres according to Claims 6 to 8.

10. A method for producing a plastics strapping band (4) according to one of claims 1 to 9, in accordance with which the constituents a) to c) are mixed with one another and are jointly extruded and the resultant plastics strapping band (4) or plastics strapping band material is then stretched, and in accordance with which, for completion, the plastics strapping band (4) or the plastics strapping band material is stretched under consideration of a stretching rate from 1:2 to 1:5 and in particular 1:4 and is then optionally embossed on a band surface.

## Revendications

1. Bande de cerclage en matière plastique (4) permettant d'entourer un ou plusieurs articles et ayant les constituants suivants :
a) jusqu'à environ 90 % en poids de polyester,
b) environ 1 % en poids à 5 % en poids de polyoléfine, et
c) environ 5 % en poids à 10 % en poids d'un matériau fibreux.

2. Bande de cerclage en matière plastique (4) selon la revendication 1, **caractérisée en ce que** la matériau fibreux selon c) présente une température de fusion plus élevée que les constituants a) et b).

3. Bande de cerclage en matière plastique (4) selon la revendication 1 ou 2, **caractérisée en ce que** la proportion de polyester selon a) est comprise 85 % en poids et 90 % en poids, et s'élève notamment à environ 90 % en poids.

4. Bande de cerclage en matière plastique (4) selon l'une des revendications 1 à 3, **caractérisée en ce que** ladite polyoléfine correspond à du polyéthylène, du polypropylène ainsi qu'à des combinaisons.

5. Bande de cerclage en matière plastique (4) selon l'une des revendications 1 à 4, **caractérisée en ce que** le matériau fibreux selon c) est constitué de fibres ayant une longueur inférieure ou égale à 20 mm, et notamment à 10 mm.

6. Bande de cerclage en matière plastique (4) selon l'une des revendications 1 à 5, **caractérisée en ce que** l'on met en oeuvre, en tant que matériau fibreux selon c), des fibres naturelles, notamment des fibres végétales et/ou minérales.

7. Bande de cerclage en matière plastique (4) selon l'une des revendications 1 à 6, **caractérisée en ce que** l'on met en oeuvre, en tant que matériau fibreux selon c), des fibres synthétiques, notamment des fibres à base de cellulose ou des fibres de type élastomère à base de polymères naturels.

8. Bande de cerclage en matière plastique (4) selon l'une des revendications 1 à 7, **caractérisée en ce que** le matériau fibreux selon c) est composé de fibres inorganiques, par exemple de fibres de verre, de fibres de basalte, de fibres de carbone, de fibres céramiques ou d'autres éléments apparentés.

9. Bande de cerclage en matière plastique (4) selon l'une des revendications 1 à 8, **caractérisée en ce que** le matériau fibreux selon c) est composé d'une combinaison de fibres selon les revendications 6 à 8.

10. Procédé de fabrication d'une bande de cerclage en matière plastique (4) selon l'une des revendications 1 à 9, consistant à mélanger les constituants a) à c) entre eux et à les extruder ensemble pour ensuite étirer la bande de cerclage en matière plastique (4) ou le matériau plastique pour bande de cerclage ainsi obtenu(e), la bande de cerclage en matière plastique (4) ou le matériau plastique pour bande de cerclage étant selon ledit procédé étiré(e) de manière à obtenir un rapport d'allongement compris entre 1:2 et 1:5, plus particulièrement égal à 1:4, ainsi qu'à pourvoir ensuite, le cas échéant, une surface de bande d'un gaufrage.
